# EUROPEAN PATENT APPLICATION

(11) **EP 4 624 993 A1**
(43) Date of publication of application: **01.10.2025**
(21) Application number: 24222081.2
(22) Date of filing: 20.12.2024
(51) Int. Cl.: G01S 13/86, G01S 13/931

(54) **METHOD AND DEVICE FOR DETECTING SURROUNDING ENVIRONMENT OF VEHICLE, AND STORAGE MEDIUM**

(30) Priority: 25.03.2024 CN 202410346860
(71) Applicant: Nio Technology (Anhui) Co., Ltd, Hefei City, Anhui 230601 (CN)
(72) Inventor: MA, Mingmin, Jiading Shanghai (CN); WEI, Caike, Jiading Shanghai (CN); YU, Boyang, Jiading Shanghai (CN); MAO, Tengfei, Jiading Shanghai (CN); LIU, Ziyan, Jiading Shanghai (CN)
(74) Representative: Vossius & Partner Patentanwälte Rechtsanwälte mbB

(57) **Abstract**

The present application discloses method and device for detecting a surrounding environment of vehicle, and a storage medium, and relates to the technical field of vehicles. The method disclosed by the present application includes: perceiving a surrounding environment of a vehicle based on multiple sensors, which at least include an image sensor and an ultrasonic radar sensor; when a moving target object is perceived around the vehicle based on images collected by the image sensor, detecting a distance between the moving target object and the vehicle by the image sensor and the ultrasonic radar sensor jointly; and determining a detection result of the surrounding environment of the vehicle based on the moving target object and the distance. The present application achieves accurate detection of the surrounding environment of the vehicle based on multiple sensors, and can effectively improve the safety of vehicle in the guard mode.

## Description

### FIELD OF THE INVENTION

The present application relates to the technical field of vehicles, and in particular to a method and device for detecting a surrounding environment of vehicle, and a storage medium.

### BACKGROUND OF THE INVENTION

In a guard mode, the vehicle automatically monitors dangerous situations around the vehicle when in a parking mode. When a dangerous situation is monitored, the situation around the vehicle is automatically recorded. As to how to determine a dangerous situation, a vibration sensor is usually used in the prior art to detect dangerous situations in the surrounding environment of vehicle. The vibration sensor is prone to interference to trigger an alarm; for example, accidental touching by pedestrians or passing by of large vehicles may be identified as dangerous situations to trigger the alarm due to the detection of vibration signal. To avoid this situation, if the sensitivity of the vibration sensor in detecting the vibration signal is reduced, the alarm cannot be triggered when the vehicle is lightly scratched. Therefore, using the vibration sensor to detect the surrounding environment of vehicle often leads to missed alarms and over alarms.

### SUMMARY OF THE INVENTION

In order to overcome the above defects, the method for detecting a surrounding environment of vehicle proposed in the present application can solve the problems of missed alarms and over alarms in detecting the surrounding environment of vehicle using the vibration sensor.

In a first aspect, the present application provides a method for detecting a surrounding environment of a vehicle, which includes:
perceiving a surrounding environment of a vehicle based on multiple sensors, which at least include an image sensor and an ultrasonic radar sensor;
when a moving target object is perceived around the vehicle based on images collected by the image sensor, detecting a distance between the moving target object and the vehicle by the image sensor and the ultrasonic radar sensor jointly; and
determining a detection result of the surrounding environment of the vehicle based on the moving target object and the distance.

Preferably, the perceiving a surrounding environment of a vehicle based on multiple sensors specifically includes:
using a motion detection method to detect video images collected by the image sensor; and
when a moving target object is detected, using a target detection model to identify the moving target object and determine the category and behavior of the moving target object.

Further, the determining a detection result of the surrounding environment of the vehicle based on the moving target object and the distance specifically includes: when it is determined that the moving target object is a dangerous target based on the category and behavior of the moving target object and the distance is smaller than a preset distance, then the determined detection result of the surrounding environment of the vehicle is specifically: the moving target object poses a threat to the vehicle.

Preferably, the above multiple sensors also include an acceleration sensor and/or a door sensor, and correspondingly, the method further includes:
determining the detection result of the surrounding environment of the vehicle based on an acceleration sensor signal obtained by the acceleration sensor and/or a door sensor signal obtained by the door sensor.

Further, the determining the detection result of the surrounding environment of the vehicle based on an acceleration sensor signal obtained by the acceleration sensor and/or a door sensor signal obtained by the door sensor specifically includes:
when it is detected that the vehicle vibrates based on the acceleration sensor signal, or it is detected that the vehicle door is opened based on the door sensor signal, then the determined detection result of the surrounding environment of the vehicle is specifically: the vehicle is in danger.

Preferably, the detecting a distance between the moving target object and the vehicle by the image sensor and the ultrasonic radar sensor jointly is specifically:
obtaining first position information of the moving target object based on the detection of the image sensor; and
judging whether to trigger the activation of the ultrasonic radar sensor based on the first position information; if the ultrasonic radar sensor is triggered, then obtaining second position information of the moving target object based on the detection of the ultrasonic radar sensor, and determining the distance between the moving target object and the vehicle based on the second position information; and if the ultrasonic radar sensor is not triggered, then determining the distance between the moving target object and the vehicle based on the first position information.

Preferably, the above method further includes:
determining a danger level based on the detection result of the surrounding environment of the vehicle; and
controlling the vehicle to perform alarm operations corresponding to the danger level.

Further, the alarm operations include at least one of the following operations: emitting an alarm sound, turning on vehicle lights, illuminating the central control screen, sending an alarm notification to the vehicle owner, and saving video images based on the images collected by the image sensor.

In a second aspect, the present application provides an electronic device, which includes a processor and a storage device; the storage device is adapted to store multiple program codes, and the program codes are adapted to be loaded and run by the processor to execute the method for detecting a surrounding environment of vehicle described in any one of the technical solutions of the above method for detecting a surrounding environment of vehicle.

In a third aspect, the present application provides a computer-readable storage medium, on which multiple program codes are stored; the program codes are adapted to be loaded and run by a processor to execute the method for detecting a surrounding environment of vehicle described in any one of the technical solutions of the above method for detecting a surrounding environment of vehicle.

The above one or more technical solutions of the present application at least have the following one or more advantageous effects.

In implementing the technical solution of the present application, a surrounding environment of the vehicle is perceived based on multiple sensors, which at least include an image sensor and an ultrasonic radar sensor; when a moving target object is perceived around the vehicle based on images collected by the image sensor, a distance between the moving target object and the vehicle is detected by the image sensor and the ultrasonic radar sensor jointly; and finally, a detection result of the surrounding environment of the vehicle is determined based on the moving target object and the distance. The present application achieves accurate detection of the surrounding environment of the vehicle based on multiple sensors, effectively avoiding the problems of missed alarms and over alarms of vehicle caused by the detection results, and can effectively improve the safety of vehicle in the guard mode.

### BRIEF DESCRIPTION OF THE DRAWINGS

Referring to the accompanying drawings, the disclosed content of the present application will become easier to understand. It is easy for those skilled in the art to understand that these drawings are only for illustrative purpose, and are not intended to limit the scope of protection of the present application. In addition, similar numbers in the drawings are used to represent similar components, in which:
FIG. 1 is a schematic flowchart of main steps of a method for detecting a surrounding environment of a vehicle according to an embodiment of the present application;
FIG. 2 is a schematic flowchart of the specific implementation of step S12 shown in FIG. 1;
FIG. 3 is a schematic diagram of the design architecture of the method for detecting a surrounding environment of a vehicle according to an embodiment of the present application; and
FIG. 4 is a schematic block diagram of the composition of a system for detecting a surrounding environment of a vehicle according to an embodiment of the present application.

### DETAILED DESCRIPTION OF THE EMBODIMENT(S) OF THE INVENTION

Hereinafter, some embodiments of the present application will be described with reference to the accompanying drawings. It should be understood by those skilled in the art that these embodiments are only used to explain the technical principles of the present application, and are not intended to limit the scope of protection of the present application.

In the description of the present application, "module" and "processor" may include hardware, software, or a combination of both hardware and software. A module may include hardware circuits, various suitable sensors, communication ports, memories, and may also include software components such as program codes, or a combination of software and hardware. The processor can be a central processing unit, a microprocessor, an image processor, a digital signal processor, or any other suitable processor. The processor has data and/or signal processing functions. The processor can be implemented in software, hardware, or a combination of both software and hardware. Non-temporary computer-readable storage media include any suitable medium that can store program codes, such as magnetic disk, hard drive, optical disk, flash memory, read-only memory, random access memory, etc. The term "A and/or B" refers to all possible combinations of A and B, such as only A, only B, or A and B. The term "at least one A or B" or "at least one of A and B" has a similar meaning to "A and/or B" and can include only A, only B, or A and B. The singular form of term "one" and "this" may also include the plural form.

Preferred embodiments of the present application will be described below in connection with the accompanying drawings of the specification. It should be understood that the preferred embodiments described herein are only for illustration and explanation of the present application, and are not intended to limit the present application. Moreover, the embodiments and features of the embodiments in the present application may be combined with each other if they do not conflict with each other.

It should be noted that the method for detecting a surrounding environment of a vehicle provided in the embodiment of the present application is mainly applied to vehicles in the guard mode or parking mode. The method for detecting a surrounding environment of a vehicle provided by the present application is a solution for accurately detecting dangerous situations around the vehicle based on the combination of multiple sensors installed on the vehicle, which can effectively improve the accuracy of judging dangerous events around the vehicle.

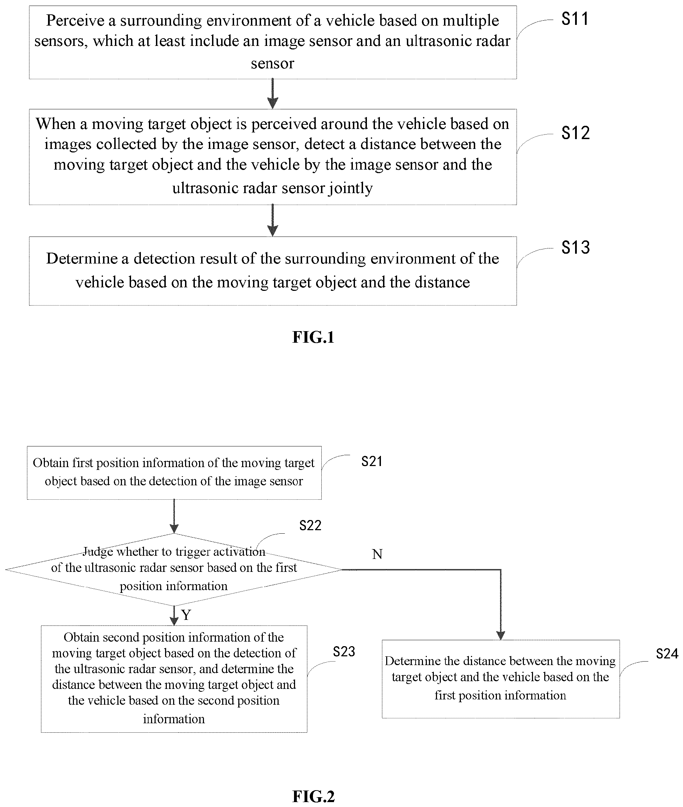

Reference is made to FIG. 1, which is a flowchart of main steps of a method for detecting a surrounding environment of a vehicle according to an embodiment of the present application. As shown in the figure, the method mainly includes the following steps S11 to S13.

Step S11: perceiving a surrounding environment of a vehicle based on multiple sensors, which at least include an image sensor and an ultrasonic radar sensor.

Specifically, in this embodiment, video images can be collected and obtained by the image sensor, and an ultrasonic radar sensor signal can be obtained by the ultrasonic radar sensor.

The perceiving a surrounding environment of a vehicle based on multiple sensors at least includes: perceiving the surrounding environment of the vehicle based on the video images collected and obtained by the image sensor, which is specifically:
using a motion detection method to detect the video images collected by the image sensor.

For example, the motion detection method described in this embodiment is specifically the optical flow method, which can detect target objects with pixel changes in the video images, and thus determine the existence of moving target objects.

When a moving target is detected, a target detection model is used to identify the moving target and determine its category and behavior.

For example, the target detection model described in this embodiment can be any convolutional neural network model in the prior art that can be used for general object identification. In this embodiment, the specific model is not limited. By inputting video images to the model, the category and behavior of the general target objects output by the model can be obtained, where the general target objects refer to people, vehicles, pets, etc.

Optionally, the perceiving the surrounding environment of the vehicle based on the video images collected and obtained by the image sensor can also specifically be: using a target detection model to detect the video images collected by the image sensor and determine the detection result, which includes the position information, category and behavior of the target object. The existence of a moving target object can be determined based on whether the position information of the same target object changes in adjacent image frames.

Step S12: when a moving target object is perceived around the vehicle based on images collected by the image sensor, detecting a distance between the moving target object and the vehicle by the image sensor and the ultrasonic radar sensor jointly.

In this embodiment, specifically, the specific implementation of detecting a distance between the moving target object and the vehicle by the image sensor and the ultrasonic radar sensor jointly is shown in FIG. 2, which includes the following steps S21 to S24.

Step S21: obtaining first position information of the moving target object based on the detection of the image sensor.

Specifically, based on the calibration parameters and imaging principles of the image sensor (such as a camera), the distance between the moving target object in the image and the camera can be calculated and recorded as first position information. The calibration parameters of the camera refer to the optimal parameter values determined during the operation of the camera, which generally include internal and external parameters of the camera.

Step S22: judging whether to trigger the activation of the ultrasonic radar sensor based on the first position information; if the ultrasonic radar sensor is triggered, then executing step S23; and if the ultrasonic radar sensor is not triggered, then executing step S24.

Specifically, the ultrasonic radar sensor is generally installed right in front of or behind the vehicle, and in the parking mode, the ultrasonic radar sensor is not turned on. Only when a moving target object is determined to be appearing right in front of or behind the vehicle based on the first position information, the activation of the ultrasonic radar sensor is triggered to obtain more accurate position information of the moving target object based on the ultrasonic radar sensor.

Step S23: obtaining second position information of the moving target object based on the detection of the ultrasonic radar sensor, and determining the distance between the moving target object and the vehicle based on the second position information.

Specifically, the second position information obtained based on the detection of the ultrasonic radar sensor at least includes the distance between the moving target object and the vehicle, and may also include information such as a moving speed of the moving target object.

Step S24: determining the distance between the moving target object and the vehicle based on the first position information.

Specifically, the first position information, i.e., the distance between the moving target object and the camera, is directly determined as the distance between the target object and the vehicle.

Step S13: determining a detection result of the surrounding environment of the vehicle based on the moving target object and the distance.

In this embodiment, specifically, when it is determined that the moving target object is a dangerous target based on the category and behavior of the moving target object and the distance is smaller than a preset distance, then the determined detection result of the surrounding environment of the vehicle is specifically: the moving target object poses a threat to the vehicle. For example, the preset distance is preset to 0.3m.

In some embodiments, the multiple sensors in step S11 may also include an acceleration sensor and/or a door sensor.

Correspondingly, the method for detecting a surrounding environment of a vehicle provided in this embodiment further includes:
determining the detection result of the surrounding environment of the vehicle based on an acceleration sensor signal obtained by the acceleration sensor and/or a door sensor signal obtained by the door sensor; and when it is detected that the vehicle vibrates based on the acceleration sensor signal, or it is detected that the vehicle door is opened based on the door sensor signal, then the determined detection result of the surrounding environment of the vehicle is specifically: the vehicle is in danger.

In some embodiments, after determining the detection result of the surrounding environment of the vehicle, the method further includes: determining a danger level based on the detection result of the surrounding environment of the vehicle, and controlling the vehicle to perform alarm operations corresponding to the danger level.

Optionally, the alarm operations include at least one of the following operations: emitting an alarm sound, turning on vehicle lights, illuminating the central control screen, sending an alarm notification to the vehicle owner, and saving video images based on the images collected by the image sensor.

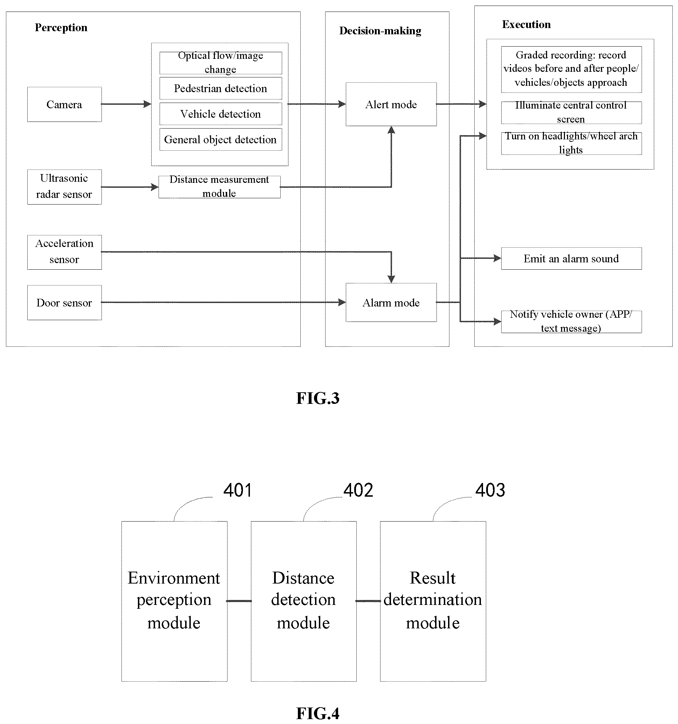

Reference is made to FIG. 3, which is a schematic diagram of the design architecture of the method for detecting a surrounding environment of a vehicle provided by the present application when applied to a vehicle. As shown in the figure, the design architecture of the method mainly includes three parts: a perception part, a decision-making part, and an execution part.

The perception part is mainly achieved through multiple sensors installed on the vehicle, such as a camera, an ultrasonic radar sensor, an acceleration sensor, and a door sensor installed on the vehicle. The camera is used to collect and obtain video images around the vehicle. For the video images collected and obtained, the method mainly detects whether there is a moving target object in the image and identifies what the moving target object is. Specifically, based on adjacent image frames of the video image, the method can detect changes in optical flow/image and further determine whether there is a moving target object. When the existence of a moving target object is determined, an existing general convolutional neural network model is used for pedestrian detection, vehicle detection, and general object detection to identify what the moving target object is. Further, the pedestrian detection, vehicle detection and general object detection based on the general convolutional neural network model can also identify the behavior of the moving target object and the distance between the moving target object and the vehicle, further accurately judging whether the moving target object poses a threat to the vehicle. The ultrasonic radar sensor is used to implement the function of a distance measurement module, that is, the distance between the moving target object and the vehicle can also be detected and obtained based on the ultrasonic radar sensor, and the accuracy of the distance detected and obtained based on the ultrasonic radar sensor is high. The embodiment of the present application uses the camera and the ultrasonic radar sensor to jointly detect and determine the distance between the moving target object and the vehicle simultaneously. When the distance can be detected and obtained based on the camera and the ultrasonic radar sensor simultaneously, the distance detected and obtained by the ultrasonic radar sensor is preferentially used as the distance between the moving target object and the vehicle.

The decision-making part decides that the vehicle enters an alert mode or alarm mode mainly based on the perception results of the multiple sensors of the perception part. For example, it is determined whether to enter the alert mode based on the perception results of the camera and the ultrasonic radar sensor jointly, and it is determined whether to enter the alarm mode based on the perception result of the acceleration sensor or the door sensor. It can be understood that generally, when the perception result is that there is a moving target object which poses a threat to the vehicle, the vehicle is decided to enter the alert mode, and when the perception result is that the vehicle is in danger, the vehicle is decided to enter the alarm mode.

The execution part is configured to, mainly based on the alert mode or alarm mode determined by the decision-making part, execute preset alarm operations corresponding to the alert mode or alarm mode. For example, the preset alarm operations corresponding to the alert mode may include: illuminating the central control screen, turning on the headlights/wheel arch lights, and graded recording, where graded recording refers to recording videos before and after the moment when people/vehicles/objects approach. The preset alarm operations corresponding to the alarm mode may include: emitting an alarm sound, notifying the vehicle owner (APP/text message), illuminating the central control screen, turning on the headlights/wheel arch lights, and graded recording.

In a specific implementation, for the alert mode and alarm mode of the above decision-making part, three levels of alarm modes can also be specifically set. For example, when it is determined based on the perception results of the camera and ultrasonic radar sensor that there is a moving target object which poses a threat to the vehicle, the vehicle is controlled to enter a first level alarm mode. When the vibration signal is detected by the acceleration sensor, the vehicle is controlled to enter a second level alarm mode. When the door sensor detects that the door is opened, the vehicle is controlled to enter a third level alarm mode. Correspondingly, the execution part can execute different alarm operations respectively based on the three different levels of alarm modes.

Further, the present application also provides a system for detecting a surrounding environment of a vehicle.

Referring to FIG. 4, which is a main structural block diagram of the system for detecting a surrounding environment of a vehicle according to an embodiment of the present application, the system mainly includes:
an environment perception module 401, which is configured to perceive a surrounding environment of a vehicle based on multiple sensors, which at least include an image sensor and an ultrasonic radar sensor;
a distance detection module 402 which is configured to, when the environment perception module 401 perceives a moving target object around the vehicle based on images collected by the image sensor, detect a distance between the moving target object and the vehicle through the image sensor and the ultrasonic radar sensor jointly; and
a result determination module 403, which is configured to determine a detection result of the surrounding environment of the vehicle based on the moving target object and the distance.

For ease of explanation, the above introduction to the system for detecting a surrounding environment of a vehicle only shows the parts related to the embodiments of the present application. For specific technical details not disclosed, reference may be made to the parts of the method of the embodiment of the present application.

It should be understood that since the settings of various modules are only for illustrating the functional units of the present application, the physical device corresponding to these modules can be the processor itself, or a part of the software, a part of the hardware, or a part of the combination of software and hardware in the processor. Therefore, the number of various modules in the figure is only illustrative.

It can be understood by those skilled in the art that the various modules in the system can be adaptively split or merged. The splitting or merging of specific modules will not cause the technical solutions to deviate from the principles of the present application; therefore, the technical solutions after splitting or merging will all fall within the scope of protection of the present application.

It can be understood by those skilled in the art that the implementation of all or part of the process in the method of the above embodiment in the present application can also be completed by instructing relevant hardware through a computer program. The computer program can be stored in a computer-readable storage medium, and when executed by a processor, the computer program can implement the steps of the above method embodiments. The computer program includes computer program codes, which can be in the form of source codes, object codes, executable files, or some intermediate forms. The computer-readable storage medium may include any entity or device capable of carrying the computer program codes, medium, USB flash drive, portable hard disk, magnetic disk, optical disk, computer memory, read-only memory, random access memory, electric carrier signal, telecommunication signal, and software distribution medium, etc. It should be noted that the content contained in the computer-readable storage medium can be appropriately added or deleted according to the requirements of legislation and patent practice within the jurisdiction. For example, in some jurisdictions, according to legislation and patent practice, the computer-readable storage medium does not include electric carrier signals and telecommunications signals.

Further, the present application also provides an electronic device.

In an embodiment of the electronic device according to the present application, the electronic device mainly includes a processor and a storage device. The storage device may be configured to store a program for executing the method for detecting a surrounding environment of a vehicle of the method embodiment described above, and the processor may be configured to execute the program in the storage device, including but not limited to a program for executing the method for detecting a surrounding environment of a vehicle of the method embodiment described above. For ease of explanation, only the parts related to the embodiments of the present application are shown. For specific technical details not disclosed, reference may be made to the parts of the method of the embodiment of the present application.

In the embodiment of the present application, the electronic device may be a control device including various electronic devices. In some possible implementations, the electronic device may include multiple storage devices and multiple processors. The program for executing the method for detecting a surrounding environment of a vehicle of the above method embodiment can be divided into multiple subprograms, each of which can be loaded and run by the processor respectively to execute different steps of the method for detecting a surrounding environment of a vehicle of the above method embodiment. Specifically, each subprogram can be stored in different storage devices respectively, and each processor can be configured to execute programs in one or more storage devices to jointly implement the method for detecting a surrounding environment of a vehicle of the above method embodiment. That is, each processor executes different steps of the method for detecting a surrounding environment of a vehicle of the above method embodiment respectively to jointly implement the method for detecting a surrounding environment of a vehicle of the above method embodiment.

The above-mentioned multiple processors can be processors deployed on the same device; for example, the above-mentioned electronic device can be a high-performance device composed of multiple processors, and the above-mentioned multiple processors can be processors deployed on the high-performance device. In addition, the above-mentioned multiple processors can also be processors deployed on different devices; for example, the above-mentioned electronic device can be a server cluster, and the above-mentioned multiple processors can be processors on different servers in the server cluster.

Further, the present application also provides a computer-readable storage medium.

In an embodiment of the computer-readable storage medium according to the present application, the computer-readable storage medium may be configured to store a program for executing the method for detecting a surrounding environment of a vehicle of the method embodiment described above, and the program can be loaded and run by a processor to implement the method for detecting a surrounding environment of a vehicle described above. For ease of explanation, only the parts related to the embodiments of the present application are shown. For specific technical details not disclosed, reference may be made to the parts of the method of the embodiment of the present application. The computer-readable storage medium may be a storage device including various electronic devices, and optionally, the computer-readable storage medium in the embodiment of the present application is a non-temporary computer-readable storage medium.

The relevant user personal information that may be involved in each embodiment of the present application is actively provided by users during the use of products/services or generated due to the use of products/services, and obtained through user authorization strictly in accordance with the requirements of laws and regulations, following the principles of legality, legitimacy and necessity, and based on the reasonable purpose of the business scene.

The user personal information processed in the present application may vary depending on the specific product/service scene, and should be in accordance with the specific scene in which the user uses the product/service. It may involve the user's account information, device information, driving information, vehicle information, or other relevant information. The applicant will treat the user's personal information and its processing with a high degree of diligence.

The present application attaches great importance to the security of user personal information, and has taken reasonable and feasible security measures that comply with industry standards to protect user information and prevent unauthorized access, public disclosure, use, modification, damage or loss of the personal information.

Hitherto, the technical solutions of the present application have been described in connection with the preferred embodiments shown in the accompanying drawings, but it is easily understood by those skilled in the art that the scope of protection of the present application is obviously not limited to these specific embodiments. Without departing from the principles of the present application, those skilled in the art can make equivalent changes or replacements to relevant technical features, and all the technical solutions after these changes or replacements will fall within the scope of protection of the present application.

## Claims

1. A method for detecting a surrounding environment of a vehicle, comprising:
perceiving a surrounding environment of a vehicle based on multiple sensors, which at least comprise an image sensor and an ultrasonic radar sensor;
when a moving target object is perceived around the vehicle based on images collected by the image sensor, detecting a distance between the moving target object and the vehicle by the image sensor and the ultrasonic radar sensor jointly; and
determining a detection result of the surrounding environment of the vehicle based on the moving target object and the distance.

2. The method according to claim 1 or 2, wherein the perceiving a surrounding environment of a vehicle based on multiple sensors specifically comprises:
using a motion detection method to detect video images collected by the image sensor; and
when a moving target object is detected, using a target detection model to identify the moving target object and determine the category and behavior of the moving target object.

3. The method according to claim 2, wherein the determining a detection result of the surrounding environment of the vehicle based on the moving target object and the distance specifically comprises: when it is determined that the moving target object is a dangerous target based on the category and behavior of the moving target object and the distance is smaller than a preset distance, then the determined detection result of the surrounding environment of the vehicle is specifically: the moving target object poses a threat to the vehicle.

4. The method according to any one of claims 1 to 3, wherein said multiple sensors also comprise an acceleration sensor and/or a door sensor, and the method further comprises:
determining the detection result of the surrounding environment of the vehicle based on an acceleration sensor signal obtained by the acceleration sensor and/or a door sensor signal obtained by the door sensor.

5. The method according to claim 4, wherein the determining the detection result of the surrounding environment of the vehicle based on an acceleration sensor signal obtained by the acceleration sensor and/or a door sensor signal obtained by the door sensor specifically comprises:
when it is detected that the vehicle vibrates based on the acceleration sensor signal, or it is detected that the vehicle door is opened based on the door sensor signal, then the determined detection result of the surrounding environment of the vehicle is specifically: the vehicle is in danger.

6. The method according to any one of claims 1 to 5, wherein the detecting a distance between the moving target object and the vehicle by the image sensor and the ultrasonic radar sensor jointly specifically is:
obtaining first position information of the moving target object based on the detection of the image sensor; and
judging whether to trigger the ultrasonic radar sensor based on the first position information; if the ultrasonic radar sensor is triggered, then obtaining second position information of the moving target object based on the detection of the ultrasonic radar sensor, and determining the distance between the moving target object and the vehicle based on the second position information; and if the ultrasonic radar sensor is not triggered, then determining the distance between the moving target object and the vehicle based on the first position information.

7. The method according to any one of claims 1 to 6, further comprising:
determining a danger level based on the detection result of the surrounding environment of the vehicle; and
controlling the vehicle to perform alarm operations corresponding to the danger level.

8. The method according to claim 7, wherein the alarm operations comprise at least one of the following operations: emitting an alarm sound, turning on vehicle lights, illuminating the central control screen, sending an alarm notification to the vehicle owner, and saving video images based on the images collected by the image sensor.

9. An electronic device, comprising a processor and a storage device which is adapted to store multiple program codes, wherein the program codes are adapted to be loaded and run by the processor to execute the method for detecting a surrounding environment of a vehicle according to any one of claims 1 to 8.

10. A computer-readable storage medium, on which multiple program codes are stored, wherein the program codes are adapted to be loaded and run by a processor to execute the method for detecting a surrounding environment of a vehicle according to any one of claims 1 to 8.
